(19) Europäisches Patentamt
European Patent Office
Office européen des brevets

(11) **EP 3 394 484 B1**

(12) **EUROPÄISCHE PATENTSCHRIFT**

(45) Veröffentlichungstag und Bekanntmachung des Hinweises auf die Patenterteilung:
**20.11.2019   Patentblatt 2019/47**

(21) Anmeldenummer: **16813235.5**

(22) Anmeldetag: **19.12.2016**

(51) Int Cl.:
*F16J 15/34* (2006.01)       *G01N 29/04* (2006.01)
*G01N 29/28* (2006.01)       *G01N 29/34* (2006.01)

(86) Internationale Anmeldenummer:
**PCT/EP2016/081726**

(87) Internationale Veröffentlichungsnummer:
**WO 2017/108680 (29.06.2017 Gazette 2017/26)**

(54) **ÜBERWACHUNG GLEITRINGDICHTUNG**

MONITORING SLIDE RING SEAL

SURVEILLANCE DE L'ÉTANCHÉITÉ DE BAGUE DE GLISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015   DE 102015226311**

(43) Veröffentlichungstag der Anmeldung:
**31.10.2018   Patentblatt 2018/44**

(73) Patentinhaber:
• **KSB SE & Co. KGaA**
  **67227 Frankenthal (DE)**
• **Bestsens AG**
  **96450 Coburg (DE)**

(72) Erfinder:
• **HAUSKE, Maximilian**
  **68165 Mannheim (DE)**
• **WEINBERGER, Tina**
  **76297 Stutensee (DE)**
• **BRÜCKNER, Christoph**
  **91301 Forchheim (DE)**
• **ROOT, Jurij**
  **90419 Nürnberg (DE)**
• **SCHNEIDER, Stefan**
  **96450 Coburg (DE)**
• **ROSSTEUTSCHER, Imannuel**
  **96450 Coburg (DE)**

(56) Entgegenhaltungen:
DE-C1- 19 725 012       NL-C2- 1 020 811
NL-C2- 1 020 811       US-A- 6 019 000
US-B1- 6 360 610

EP 3 394 484 B1

## Beschreibung

Die Erfindung betrifft eine Anordnung zur Wellendichtung mit einem rotierenden Gleitring und einem stationären Gleitring, zwischen denen ein Dichtspalt für einen Schmierfilm angeordnet ist und mindestens einem Schallwandler zum Anregen von Schallwellen in und/oder auf mindestens einem Gleitring, wobei die Anordnung eine Einheit zur Auswertung von Signalen des Schallwandlers aufweist.

Eine Wellendichtung ist eine Dichtung, die eine Kreiselpumpe an der Durchführung der rotierenden Pumpenwelle aus dem feststehenden Pumpengehäuse so abdichtet, dass der Leckverlust über die von außen eindringende Luft auf ein Mindestmaß reduziert und ein etwaiger Verschleiß der Dichtflächen so gering wie möglich wird.

Gleitringdichtungen weisen einen Dichtspalt auf, der rechtwinklig zur Wellenachse steht. Wellendichtungen dieser Bauart werden auch als axiale oder hydrodynamische Gleitringdichtungen (GLRD) bezeichnet. Solche Gleitringdichtungen benötigen gegenüber anderen Dichtungssystemen einen kleineren Raum und eine geringere Wartung.

Gleitringdichtungen bewähren sich sowohl bei niedrigen als auch bei hohen abzudichtenden Drücken und Umfangsgeschwindigkeiten.

Im Betrieb gleiten zwei Dichtflächen aufeinander, die durch hydraulische und mechanische Kräfte aufeinandergedrückt werden. Zwischen diesen beiden feinst bearbeiteten Gleitflächen befindet sich der Dichtspalt mit einem meist flüssigen Schmierfilm.

Die sehr geringe Leckage bei Gleitringdichtungen gelangt als Dampf- und Trockenleckage beim Austritt in die Atmosphäre.

Trockenlauf ist eine der wesentlichen Ausfallursachen für Gleitringdichtungen, insbesondere bei Gleitringdichtungen für Kreiselpumpen. Durch Temperaturanstieg an den Gleitflächen wird die Verdampfungstemperatur des Schmierfilms überschritten, was zu einer Verdampfung des Schmierfilms und lokalem Trockenlauf führt. Infolge des erhöhten Verschleißes und der entstehenden Reibungswärme versagt die Dichtung thermisch. Dies kann zu einem Zerbrechen der Gleitringe führen. Neben dem Verlust der Dichtwirkung ist auch ein mögliches Einspülen von Splittern in das Fluid, gegen das abgedichtet wird, schädlich.

In der EP 2 362 122 A2 wird eine Gleitringdichtung beschrieben, in die eine Fördereinrichtung zur Förderung des Schmierfluids integriert ist. Sensoren in oder nahe am Dichtspalt erfassen Betriebsparameter der Gleitringdichtung.

In der WO 2010/142367 A1 wird eine Gleitringdichtung mit einer Reibungsüberwachungseinrichtung beschrieben. Diese dient der Überwachung des Betriebszustandes der Gleitringdichtung. Die Überwachungseinrichtung umfasst einen Balken mit einem Sensorelement zur Erfassung einer Verbiegung des Balkens. Der Balken ist in einer Ausnehmung im stationären Gleitring angeordnet.

Die WO 2008/089800 A1 beschreibt eine Gleitringdichtung, die eine Überwachungseinrichtung mit einer Kraftmesseinrichtung umfasst. Die Kraftmesseinrichtung erfasst die momentanen drehsichernden Kräfte und erzeugt ein dafür kennzeichnendes Ausgangssignal. Die Kraftmesseinrichtung kann mit dem drehgesicherten Gleitring durch ein Kraftübertragungselement unmittelbar verbunden sein.

Die US 6 360 610 B1 beschreibt eine Gleitringdichtung mit einer Punkt-zu-Punkt-Kontaktdetektion zwischen einem Sender und einem Empfänger. Dabei wird vom Sender eine Scherwelle (Transversalwelle) erzeugt. Ein Wandler erzeugt eine Ultraschall-Scherwelle an der Schnittstelle zwischen einer festen Fläche und der Drehfläche. Während des normalen Betriebs wird die Ultraschall-Scherwelle in erster Linie von der Grenzfläche reflektiert. Ein erster Wandler erzeugt eine Ultraschall-Scherwelle, die ein zweiter Wandler erfasst, nachdem sie durch eine Schnittstelle der festen Fläche und der Drehfläche verläuft. Der zweite Wandler erkennt eine messbar stärkere Ultraschall-Scherwelle, wenn der Flüssigkeitsfilm in der Schnittstelle zusammenbricht.

Aufgabe der Erfindung ist es, eine Anordnung zur Wellendichtung anzugeben, die zuverlässig arbeitet und gegen Trockenlaufen geschützt ist. Dabei soll ein Verfahren zur Überwachung einer Gleitringdichtung zum Einsatz kommen, das möglichen Verschleiß und auftretende Schäden im laufenden Betrieb erkennt, ohne dass dabei der Betrieb gestört oder maßgeblich beeinträchtigt wird. Zudem soll sich die Anordnung durch eine möglichst kostengünstige Konstruktion und eine hohe Lebensdauer auszeichnen.

Diese Aufgabe wird erfindungsgemäß durch eine Anordnung mit den Merkmalen des Anspruchs 1 und einem Verfahren mit den Merkmalen des Anspruchs 13 gelöst. Bevorzugte Varianten sind den Unteransprüchen, der Beschreibung und den Zeichnungen zu entnehmen.

Erfindungsgemäß ist der Schallwandler zur Erzeugung und zum Empfang von Lamb-Rayleigh-Wellen eingerichtet. Im Gegensatz zur herkömmlichen Anwendung von Transversalwellen bzw. Scherwellen, die bei Anordnungen gemäß dem Stand der Technik zum Einsatz kommen, ermöglichen Lamb-Rayleigh-Wellen eine komplette Überwachung der Spaltzone des Schmierfilms über die gesamte Fläche. Erfindungsgemäß bewegen sich die Lamb-Rayleigh-Wellen geführt entlang einer kreisförmigen Laufstrecke, welche durch den Gleitring realisiert wird.

Die Lamb-Rayleigh-Wellen breiten sich in dem Gleitring aus. Dabei erfolgt die Ausbreitung vorzugsweise in Oberflächenschichten des Gleitrings. Somit handelt es sich um Oberflächenwellen. Als besonders günstig erweist es sich, wenn die Schallwandler dazu eingerichtet sind, dass sich sowohl auf der Oberfläche des Gleitrings, in welche die Schallwellen eingespeist werden als auch auf einer gegenüberliegenden Oberfläche, die mit dem Schmierfilm in Kontakt steht Schallwellen in den Oberflächenschichten des Gleitringmaterials ausbreiten.

Bei herkömmlichen Anordnungen erfolgt lediglich eine Punkt-zu-Punkt-Detektion, da Transversalwellen erzeugt werden, die sich nur geradlinig ausbreiten.

Erstaunlicherweise wurde nun festgestellt, dass eine Erzeugung und Detektion von Lamb-Rayleigh-Wellen eine Ausbreitung der Schallwellen entlang des gesamten Umfangs des Gleitrings bewirkt und dadurch der gesamte Dichtspalt und somit der komplette Schmierfilm überwacht werden können.

Dadurch wird eine zuverlässige Erkennung eines Trockenlaufens der Gleitringdichtung gewährleistet. Es handelt sich damit um eine sehr effiziente Leckageüberwachung. Auch ein Verschleiß oder eine Beschädigung der Gleitringdichtung kann frühzeitig und zuverlässig detektiert werden. Dies ist die Basis für eine vorausschauende Instandhaltung (Predictive Maintenance).

Durch die erfindungsgemäße Rundumüberwachung des Dichtspalts sind zudem Aussagen über Unwuchten der Welle möglich, beispielsweise durch Fehlausrichtungen. Auch eine Bestimmung der Drehzahl ist realisierbar.

Die erfindungsgemäße Anordnung ermöglicht eine frühzeitige Erkennung gradueller Verschlechterungen und eine Vorhersage über ein mögliches Ausfallrisiko.

Bei einer besonders günstigen Ausführung der Erfindung ist der Schallwandler zur Erzeugung bzw. zum Empfang von Schallwellen eingerichtet, deren Wellenlängen ungefähr der Breite eines Gleitrings entsprechen. Dadurch entsteht eine Lamb-Rayleigh-Welle sowohl an der vorderen Stirnseite des Gleitrings, in welche die akustischen Wellen eingekoppelt werden, als auch einer an der hinteren Stirnseite des Gleitrings zum Schmierfilm hin.

Als günstig erweist es sich, wenn das Verhältnis der Wellenlänge zur Breite des Gleitrings $\frac{\lambda}{b} < 100$, vorzugweise $\frac{\lambda}{b} < 10$, insbesondere $\frac{\lambda}{b} < 5$ ist. Erstaunlicherweise wurde festgestellt, dass sich in Gleitringen auch Lamb-Rayleigh Wellen ausbilden, wenn das Verhältnis der Wellenlänge zur Breite des Gleitrings $\frac{\lambda}{b} > 0{,}01$, vorzugsweise $\frac{\lambda}{b} > 0{,}1$, insbesondere $\frac{\lambda}{b} > 0{,}2$ ist.

Erfindungsgemäß erzeugt mindestens ein Schallwandler akustische Oberflächenwellen, die als Lamb-Rayleigh-Wellen ausgebildet sind. Die Lamb-Rayleigh-Wellen breiten sich in mindestens einem Gleitring aus, der eine begrenzte Breite besitzt. Sie entstehen durch Überlagerung einer longitudinalen- und einer transversalen Welle.

Im Gleitring entstehen dadurch verschiedene ausbreitungsfähige Moden, deren Geschwindigkeit vom Frequenz-Gleitringbreite-Produkt abhängen.

Da eine Stirnseite des Gleitrings mit dem Schmierfilm in Kontakt steht, gehen Teile der Wellenenergie in den Schmierfilm über.

Vorzugsweise werden von einem Schallwandler Wellen in einen Gleitring eingekoppelt, die sich entlang des Umfangs des Gleitrings ausbreiten. Dadurch erfolgt im Gegensatz zu herkömmlichen Anordnungen nach dem Stand der Technik keine Punkt-zu-Punkt-Kontaktdetektion zwischen Sender und Empfänger, sondern eine komplette Überwachung der Spaltzone des Schmierfilms über die gesamte Fläche.

Bei einer besonders günstigen Variante der Erfindung kommen mindestens zwei Schallwandler zum Einsatz. Diese sind vorzugsweise um einen Winkel versetzt am Gleitring angeordnet. Dabei erweist es sich als vorteilhaft, wenn die Schallwandler an einer Stirnseite eines Gleitrings angeordnet sind, wobei der Winkelversatz zwischen beiden Wandlern vorzugsweise mehr als 30°, insbesondere mehr als 60° beträgt. Dabei dient ein Schallwandler als Sender und der andere als Empfänger. Alternativ können auch mehrere Sender und/oder Empfänger zum Einsatz kommen. Auch kann ein Wandler sowohl als Sender als auch als Empfänger betrieben werden.

Durch die erfindungsgemäße Konfiguration der akustischen Oberflächenwellen können sich Lamb-Rayleigh-Wellen auf beiden Seiten des Gleitrings ausbreiten. Somit können die Schallwandler an den Außenflächen des rotierenden und/oder stationären Gleitrings angebracht werden. Dadurch ergeben sich günstige Einbaubedingungen für die Schallwandler an den Außenflächen.

Als besonders günstig erweist es sich, wenn zumindest ein Schallwandler an einem äußeren Rand des rotierenden Gleitrings und/oder stationären Gleitrings angebracht ist. Erstaunlicherweise wurde dadurch festgestellt, dass dies zu besonders präzisen Messungen führt.

Bei einer besonders günstigen Ausführung der Erfindung berühren sich der Schallwandler und die Einkoppelstelle des Gleitrings nicht flächig. Dazu kann der Schallwandler gerundet ausgebildet sein und/oder eine Stirnseite des Gleitrings mit einer Rundung zur Einkopplung und/oder Auskopplung von Schallwellen versehen sein. Erstaunlicherweise haben sich solche Rundungen als deutlich günstiger erwiesen als zwei plane Flächen, da es dadurch zu einer definierten akustischen Kopplung kommt.

Es können sowohl der Sender als auch der Empfänger mit einer Rundung ausgebildet sein. Alternativ kann auch nur einer der beiden mit einer Rundung ausgebildet sein.

Ergänzend oder alternativ kann der Schallwandler und/oder eine Stirnseite eines Gleitrings einen Vorsprung zur Ein- bzw. Auskopplung von Schallwellen aufweisen. Auch kann ein Schallwandler und/oder eine Stirnseite eines Gleitrings eine Abschrägung zur Ein- bzw. Auskopplung von Schallwellen aufweisen.

Weitere Merkmale und Vorteile der Erfindung ergeben sich aus der Beschreibung von Ausführungsbeispielen anhand von Zeichnungen und aus den Zeichnungen selbst.

Dabei zeigt:

Figur 1 eine Kreiselpumpe mit einer Anordnung zur Wellendichtung,

Figur 2 eine perspektivische Schnittdarstellung einer Gleitring-Dichtungs-Anordnung,

Figur 3 eine schematische Darstellung von Sender und Empfänger angebracht an eine Gleitringdichtung,

Figur 4 eine schematische Darstellung einer Modenkonversion einer Lamb-Welle,

Figur 5a eine schematische Darstellung (teilweise als Schnitt) einer Gleitring-Dichtungs-Anordnung,

Figur 5b eine Sicht auf eine Stirnseite eines Gleitrings gemäß der Darstellung von Figur 5a,

Figur 6 einen Gleitring mit einer Stirnseite, die einen Vorsprung aufweist,

Figur 7 einen Gleitring, der eine Abschrägung aufweist.

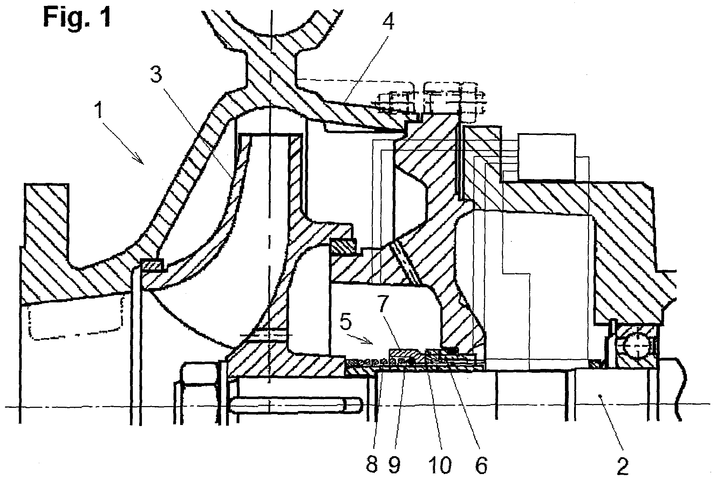

Figur 1 zeigt eine Kreiselpumpe 1 mit einer rotierenden Welle 2, einem Laufrad 3 und einem feststehenden Gehäuse 4. Eine Gleitringdichtung 5 besitzt einen ersten axial feststehenden Gleitring 6 und einen zweiten axial beweglichen Gleitring 7. Der axial bewegliche Gleitring 7 ist mittels eines Vorspannelements 8, hier eine Druckfeder, und über einen Druckring 9 in Richtung auf den ersten Gleitring 6 gedrückt, sodass einander gegenüberliegende Flächen des ersten und zweiten Gleitrings 6, 7 abdichtend zusammenwirken und zwischen sich einen Dichtspalt 10 ausbilden. Der erste Gleitring 6 ist stationär im Gehäuse 4 angeordnet. Der gefederte Gleitring 7 ist drehfest mit der Welle 2 der Kreiselpumpe 1 verbunden.

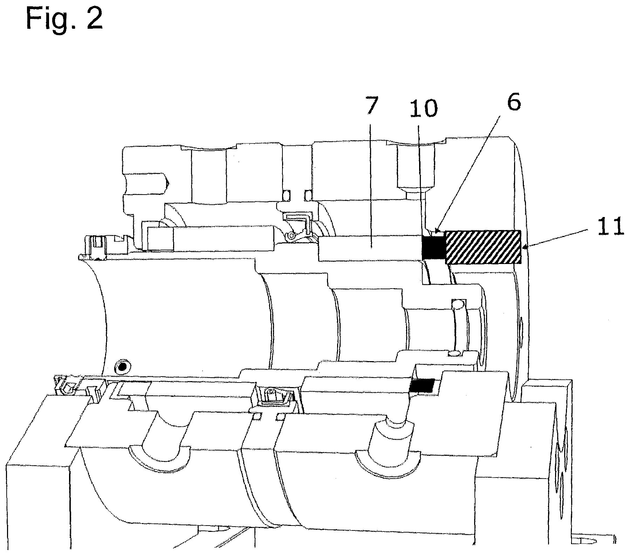

Figur 2 zeigt als perspektivische Schnittdarstellung eine Einbauvariante einer Gleitring-Dichtungs-Anordnung mit einem Schallwandler 11, der im trockenen Bereich angeordnet ist. Der Schallwandler 11 koppelt akustische Oberflächenwellen in eine Stirnseite eines stationären Gleitrings 6 ein. An der gegenüberliegenden Stirnseite des stationären Gleitrings 6 befindet sich der Dichtspalt zwischen dem stationären Gleitring 6 und dem beweglichen Gleitring 7. Der Dichtspalt 10 ist von einem Schmierfilm ausgefüllt.

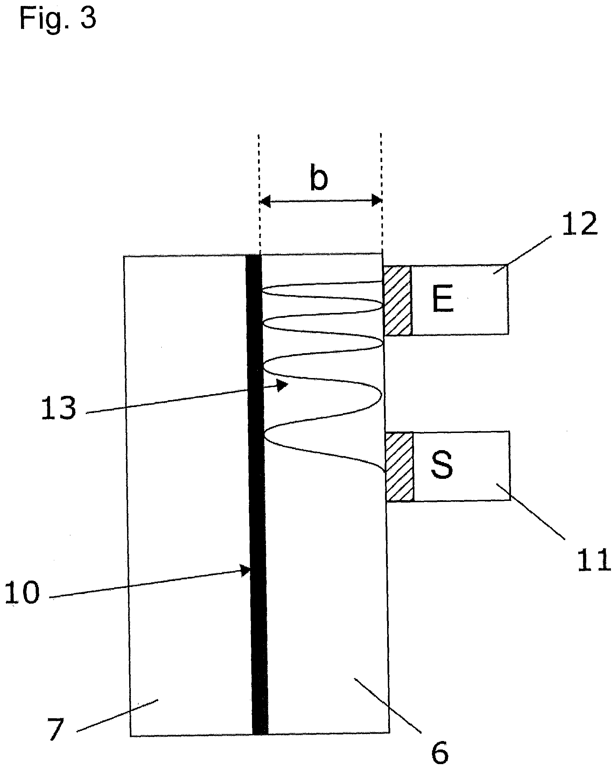

Figur 3 zeigt eine schematische Darstellung mit einem ersten Schallwandler 11, der als Sender ausgebildet ist und einem zweiten Schallwandler 12, der als Empfänger ausgebildet ist. Sowohl der Sender 11 als auch der Empfänger 12 sind an der Stirnseite eines stationären Gleitrings 6 angeordnet. Erfindungsgemäß erzeugt der Sender 11 eine akustische Oberflächenwelle, die als Lamb-Rayleigh-Welle ausgebildet ist.

Der stationäre Gleitring 6 besitzt eine begrenzte Breite b. Erfindungsgemäß entspricht die Wellenlänge der akustischen Oberflächenwelle, die im stationären Gleitring 6 eingekoppelt wird, ungefähr der Breite b des Gleitrings, vorzugsweise mit einer Abweichung von +/- 30 %, insbesondere mit einer Abweichung von +/- 10 %. Dadurch wird die Lamb-Welle zur Überlagerung von zwei Raleigh-Wellen, einer an der vorderen Stirnseite des Gleitrings 6 und eine an der hinteren Stirnseite des Gleitrings 6.

Im Gleitring 6 entstehen dadurch verschiedene ausbreitungsfähige Moden, deren Geschwindigkeit vom Frequenz-Gleitringbreite-Produkt abhängen. Die gegenüberliegende Stirnseite des Gleitrings 6 (mit Blick auf die Zeichnung links) steht mit dem Dichtspalt 10 in Kontakt, der von einem Schmierfilm ausgefüllt wird. In den Schmierfilm gehen Teile der Wellenenergie über. Bei der Anordnung zur Wellendichtung dient ein Gleitring 6 als Ausbreitungssubstrat. Hierauf werden mittels des Senders 11 die Lamb-Rayleigh-Wellen erzeugt. Diese breiten sich an den Oberflächen aus und werden vom Empfänger 12 wieder aufgenommen.

Während der Übertragung des akustischen Signals, wird es von den akustischen Eigenschaften des Substrats beeinflusst. Ändert sich die viskose Flüssigkeitsschicht der Oberfläche durch den mitgeführten Schmierfilm spiegeln sich diese Effekte in einer modulierten Ausbreitungsgeschwindigkeit und Dämpfung der Oberflächenwelle wieder, was wiederum Einfluss auf die Messgrößen der Empfangsamplitude und Wellenlaufzeit hat. Aus den gesendeten und empfangenen Signalen können mittels Signalanalyse Rückschlüsse auf die Dicke des Schmierspalts bzw. die Konsistenz des Schmierfilms geschlossen werden. Dadurch können Probleme wie ein möglicher Trockenlauf bzw. eine Teilschmierung frühzeitig erkannt werden. Dies ist die Basis für eine prä- diktive Instandhaltung. Vorzugsweise besteht mindes- tens ein Gleitring 6, 7 aus einem Siliziumcarbidwerkstoff (SiC-SiC). Prinzipiell sind aber auch andere Materialien möglich, wie zum Beispiel Kohle. Je "weicher" das Material ist, desto stärker ist die Dämpfung der Lamb-Rayleigh-Welle auf der Übertragungsstrecke. Piezoelektrisches als auch nicht piezoelektrisches Material ist als Ausbreitungsmedium für Lamb-Rayleigh-Wellen möglich.

Die Auswertung der Signale erfolgt über eine Einheit, die vorzugsweise als Steuer- und/oder Auswerteeinheit ausgebildet ist. Dabei hat sich eine primäre Auswertung im Zeitbereich als vorteilhaft erwiesen, wobei insbesondere Amplitude, Laufzeit, Energie, Form des Signals, Höhenkurve analysiert werden.

Die Ausbreitungsgeschwindigkeit der erfindungsgemäß erzeugten Lamb-Rayleigh-Wellen ist abhängig von der Breite des Dichtspalts 10. Dies ermöglicht damit prinzipiell eine kontinuierliche Aussage zur Qualität des Zustands des Dichtspalts 10. Mit herkömmlichen Transversalwellen, wie sie beim Stand der Technik zum Einsatz kommen, wäre nur eine binäre Ja/Nein-Aussage möglich. Somit lässt sich damit nur eine Aussage darüber treffen, ob der Dichtspalt 10 mit einem Schmierfilm befüllt ist oder nicht. Dies liegt daran, dass eine Transversalwelle nicht in den Schmierfilm eindringen kann.

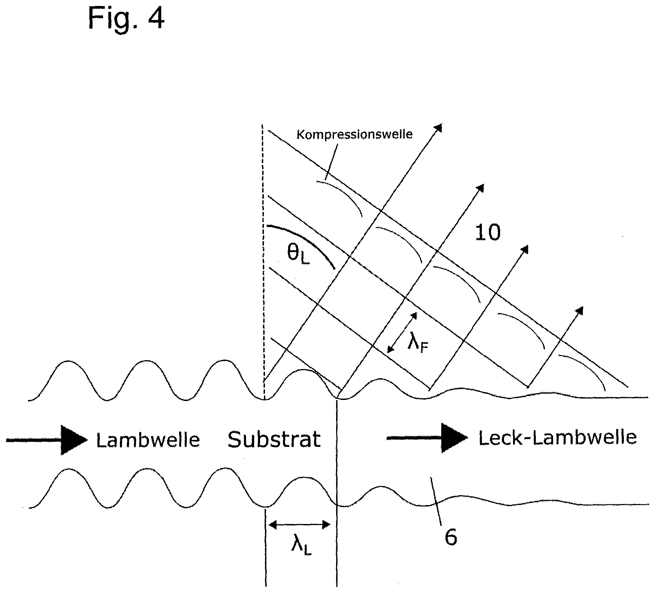

Figur 4 zeigt noch einmal anschaulich die Ausbreitung einer Lamb-Rayleigh-Welle. Die Lamb-Rayleigh-Welle tritt in Wechselwirkung mit dem Schmierfilm des Dichtspalts 10, der mit Blick auf die Darstellung gemäß Figur 4 oberhalb des Gleitrings 6 angeordnet ist, wobei der Gleitring 6 das Substrat für die Ausbreitung der Lamb-Rayleigh-Welle bildet.

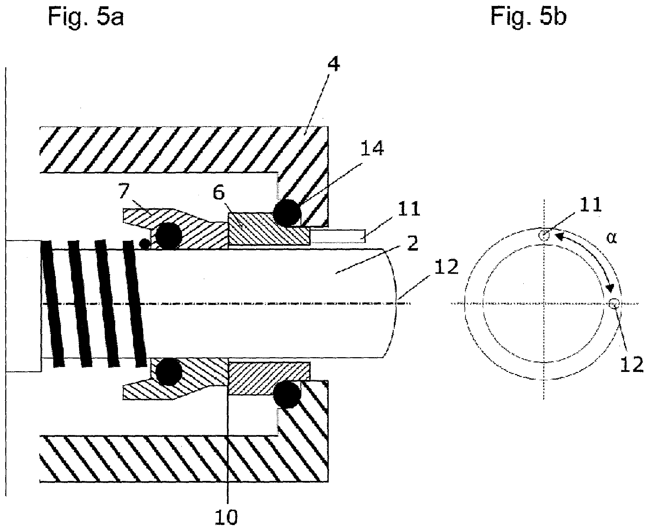

Figur 5a zeigt eine Darstellung, teilweise als Schnittdarstellung, mit einem stationären Gleitring 6 und einem axial verschieblichen Gleitring 7. An einer Stirnseite im trockenen Bereich des stationären Gleitrings 6 sind ein Sender 11 und ein Empfänger 12 angeordnet. In Figur 5b erkennt man, dass Sender 11 und Empfänger 12 um einen Winkel α versetzt zueinander entlang des Umfangs an der Stirnseite des Gleitrings 6 angeordnet sind. Der Winkel α kann zwischen 1 und 180° betragen. Im Ausführungsbeispiel gemäß der Darstellung in Figur 5b beträgt der Winkel α 90°.

Der Sender 11 erzeugt eine Lamb-Rayleigh-Welle, die sich auf beiden Seiten des feststehenden Rings 6 der Gleitringdichtung in beide Richtungen (links und rechts umlaufend) ausbreitet. Die Lamb-Rayleigh-Welle tritt in Wechselwirkung mit dem Schmierfilm im Dichtspalt 10. Je nach Winkelversatz α zwischen Sender 11 und Empfänger 12 treffen die rechts- und linksumlaufende Welle zu unterschiedlichen Zeitpunkten am Empfänger 12 ein und können so getrennt ausgewertet werden. Aus den Signaleigenschaften des Empfangssignals können Rückschlüsse auf den Zustand des Dichtspalts 10 mit dem Schmierfilm gezogen werden. Es können auch mehrere Umläufe der Wellen ausgewertet werden. Dies führt zu einer Vergrößerung des Messeffekts und des ausgewerteten Bereichs. Alternativ kann auch ein Schallwandler 11, 12 gleichzeitig als Sender und Empfänger dienen (multiplexen).

Die Darstellung gemäß Figur 5a zeigt, dass sowohl der feststehende Gleitring 6 als auch der axial verschiebliche Gleitring 7 nicht als rein hohlzylindrische Körper ausgebildet sind. So weist beispielsweise der feststehende Gleitring 6 einen ersten Abschnitt auf, mit Blick auf die Figur der rechte Abschnitt, der einen kleineren Außendurchmesser hat als der mit Blick auf die Figur linke Abschnitt. Dieser Vorsprung dient der Fixierung eines Dichtelements 14 zwischen dem Gleitring 6 und dem feststehenden Gehäuse 4. Dieses Dichtelement 14 ist als O-Ring im Ausführungsbeispiel ausgebildet.

Ein solcher Versatz wie in Figur 5a beim axial feststehenden Gleitring 6 bzw. axial beweglichen Gleitring 7 ausgebildet, kann Schwierigkeiten bei der Ausbreitung der akustischen Oberflächenwellen bereiten.

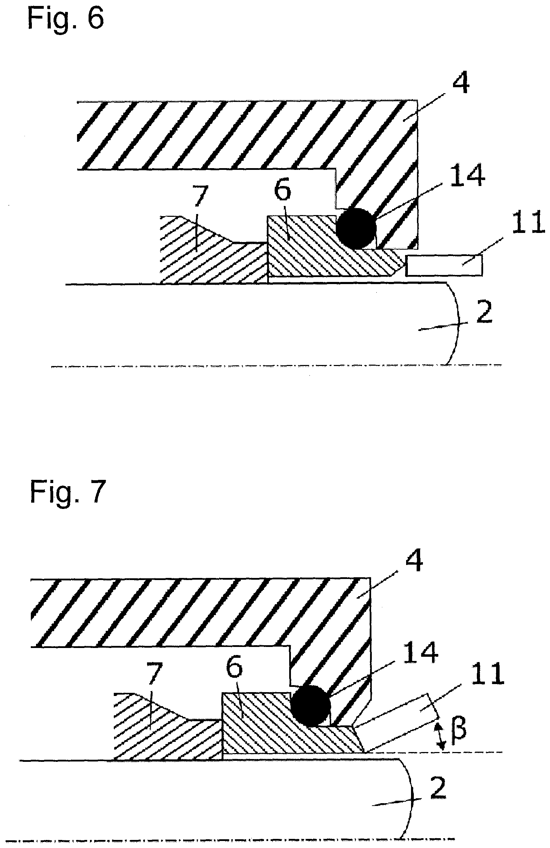

Figur 6 zeigt eine Variante, bei der eine Stirnseite des Gleitrings 6, mit Blick auf die Zeichnung die rechte Stirnseite, einen Vorsprung auf, sodass der Sender 11 und/oder der Empfänger 12 nicht flächig an den Gleitring ankoppeln, sondern nur entlang einer Linie des Vorsprungs.

Figur 7 zeigt eine Variante wie das Problem eines bei Gleitring 6 vorhandenen Versatzes gelöst werden kann. Auch wenn der Gleitring 6 einen Versatz aufweist, ist mit dieser Konstruktion eine günstige Ausbreitung der akustischen Oberflächenwelle möglich. Bei dieser Variante ist eine Stirnseite des Gleitrings 6 abgeschrägt, sodass nicht in rein axiale Richtung in den Gleitring 6 eingekoppelt wird sondern unter einem Winkel β.

**Patentansprüche**

1. Anordnung zur Wellendichtung mit mindestens einem rotierenden Gleitring (6) und einem stationären Gleitring (7), zwischen denen ein Dichtspalt (10) für einen Schmierfilm angeordnet ist und mindestens einem Schallwandler (11, 12) zum Anregen von Schallwellen in und/oder auf mindestens einem Gleitring (6, 7), wobei die Anordnung eine Einheit zur Auswertung von Signalen des Schallwandlers (11, 12) umfasst, **dadurch gekennzeichnet, dass** der Schallwandler (11, 12) zur Erzeugung und/oder zum Empfang von Lamb-Rayleigh-Wellen eingerichtet ist.

2. Anordnung nach Anspruch 1, **dadurch gekennzeichnet, dass** der Schallwandler (11, 12) zur Erzeugung und/oder zum Empfang von akustischen Oberflächenwellen mit einem Verhältnis der Wellenlängen (λ) zur Breite (b) des Gleitrings (6, 7) von kleiner als 100, vorzugsweise kleiner als 10, insbesondere kleiner 5 ist.

3. Anordnung nach Anspruch 1 oder 2, **dadurch gekennzeichnet, dass** der Schallwandler (11, 12) zur Erzeugung und/oder zum Empfang von akustischen Oberflächenwellen mit einem Verhältnis der Wellenlängen (λ) zur Breite (b) des Gleitrings (6, 7) von größer als 0,01, vorzugsweise größer als 0,1, insbesondere größer als 0,2 eingerichtet ist.

4. Anordnung nach einem der Ansprüche 1 bis 3, **dadurch gekennzeichnet, dass** der Schallwandler (11, 12) zur Erzeugung und/oder zum Empfang von Wellen eingerichtet ist, die sich entlang des Umfangs des Gleitrings (6, 7) ausbreiten.

**5.** Anordnung nach einem der Ansprüche 1 bis 4, **dadurch gekennzeichnet, dass** der Schallwandler (11, 12) zur Erzeugung und/oder zum Empfang von Wellen eingerichtet ist, die sich an einer vorderen Stirnseite des Gleitrings (6, 7) und/oder an einer hinteren Stirnseite des Gleitrings (6, 7) ausbreiten.

**6.** Anordnung nach einem der Ansprüche 1 bis 5, **dadurch gekennzeichnet, dass** mindestens zwei Schallwandler (11, 12) um einen Winkel ($\alpha$) versetzt am Gleitring (6, 7) angeordnet sind, wobei der Winkel ($\alpha$) vorzugsweise mehr als 30°, insbesondere mehr als 60° beträgt.

**7.** Anordnung nach einem der Ansprüche 1 bis 6, **dadurch gekennzeichnet, dass** mindestens ein Schallwandler (11, 12) an einer Stirnseite eines Gleitrings (6, 7) angeordnet ist.

**8.** Anordnung nach einem der Ansprüche 1 bis 7, **dadurch gekennzeichnet, dass** sich der Schallwandler (11, 12) und die Einkoppelstelle des Gleitrings (6, 7) nicht flächig berühren.

**9.** Anordnung nach einem der Ansprüche 1 bis 8, **dadurch gekennzeichnet, dass** der Schallwandler (11, 12) eine Rundung zur Einkopplung und/oder Auskopplung von Schallwellen aufweist.

**10.** Anordnung nach einem der Ansprüche 1 bis 9, **dadurch gekennzeichnet, dass** der Schallwandler (11, 12) einen Vorsprung zur Einkopplung und/oder Auskopplung von Schallwellen aufweist.

**11.** Anordnung nach einem der Ansprüche 1 bis 10, **dadurch gekennzeichnet, dass** eine Stirnseite eines Gleitrings (6, 7) einen Vorsprung zur Einkopplung und/oder Auskopplung von Schallwellen durch den Schallwandler (11, 12) aufweist.

**12.** Anordnung nach einem der Ansprüche 1 bis 11, **dadurch gekennzeichnet, dass** eine Stirnseite eines Gleitrings (6, 7) eine Rundung zur Einkopplung und/oder Auskopplung von Schallwellen durch den Schallwandler (11, 12) aufweist.

**13.** Anordnung nach einem der Ansprüche 1 bis 12, **dadurch gekennzeichnet, dass** ein Schallwandler (11, 12) und/oder eine Stirnseite eines Gleitrings (6, 7) eine Abschrägung zur Einkopplung und/oder Auskopplung von Schallwellen aufweist.

**14.** Anordnung nach einem der Ansprüche 1 bis 13, **dadurch gekennzeichnet, dass** der Schallwandler (11, 12) an einem äußeren Rand des Gleitrings (6, 7) angeordnet ist.

**15.** Verfahren zur Überwachung einer Gleitringdichtung (5), die mindestens einen rotierenden Gleitring (7) und mindestens einen stationären Gleitring (6) aufweist, **dadurch gekennzeichnet, dass** in und/oder auf mindestens einem Gleitring (6, 7) Lamb-Rayleigh-Wellen erzeugt und/oder erfasst werden.

**16.** Verfahren nach Anspruch 15, **dadurch gekennzeichnet, dass** in mindestens einem Gleitring (6, 7) Schallwellen erzeugt und erfasst werden, die sich entlang des Umfangs des Gleitrings (6, 7) ausbreiten.

**17.** Verfahren nach Anspruch 15 oder 16, **dadurch gekennzeichnet, dass** in mindestens einem Gleitring (6, 7) Schallwellen erzeugt werden, deren Wellenlängen ($\lambda$) im Verhältnis zur Breite (b) des Gleitrings (6, 7) kleiner als 100, vorzugsweise kleiner als 10, insbesondere kleiner als 5 sind.

**18.** Verfahren nach einem der Ansprüche 15 bis 17, **dadurch gekennzeichnet, dass** in mindestens einem Gleitring (6, 7) Schallwellen erzeugt werden, deren Wellenlängen ($\lambda$) im Verhältnis zur Breite (b) des Gleitrings (6, 7) größer als 0,01, vorzugsweise größer als 0,1, insbesondere größer als 0,2 sind.

**19.** Verfahren nach einem der Ansprüche 15 bis 18, **dadurch gekennzeichnet, dass** sich die Wellen entlang des Umfangs des Gleitrings (6, 7) ausbreiten.

**20.** Verfahren nach einem der Ansprüche 15 bis 19, **dadurch gekennzeichnet, dass** die Wellen an einer vorderen Stirnseite des Gleitrings (6, 7) und/oder an einer hinteren Stirnseite des Gleitrings (6, 7) ausbreiten.

**Claims**

**1.** Arrangement for shaft sealing having at least one rotating slide ring (6) and a stationary slide ring (7) between which a sealing gap (10) for a lubricating film is arranged and having at least one sound transducer (11, 12) for exciting sound waves in and/or on at least one slide ring (6, 7), wherein the arrangement comprises a unit for evaluating signals of the sound transducer (11, 12),
**characterized in that**
the sound transducer (11, 12) is designed for generating and/or receiving Lamb-Rayleigh waves.

**2.** Arrangement according to Claim 1, **characterized in that** the sound transducer (11, 12) is for generating and/or receiving acoustic surface waves with a ratio of the wavelengths ($\lambda$) to the width (b) of the slide ring (6, 7) of less than 100, preferably less than 10, in particular less than 5.

**3.** Arrangement according to Claim 1 or 2, **characterized in that** the sound transducer (11, 12) is designed for generating and/or receiving acoustic surface waves with a ratio of the wavelengths (λ) to the width (b) of the slide ring (6, 7) of greater than 0.01, preferably greater than 0.1, in particular greater than 0.2.

**4.** Arrangement according to one of Claims 1 to 3, **characterized in that** the sound transducer (11, 12) is designed for generating and/or receiving waves which propagate along the circumference of the slide ring (6, 7).

**5.** Arrangement according to one of Claims 1 to 4, **characterized in that** the sound transducer (11, 12) is designed for generating and/or receiving waves which propagate at a front end face of the slide ring (6, 7) and/or at a rear end face of the slide ring (6, 7).

**6.** Arrangement according to one of Claims 1 to 5, **characterized in that** at least two sound transducers (11, 12) are arranged offset through an angle (α) on the slide ring (6, 7), wherein the angle (α) is preferably greater than 30°, in particular greater than 60°.

**7.** Arrangement according to one of Claims 1 to 6, **characterized in that** at least one sound transducer (11, 12) is arranged at an end face of a slide ring (6, 7).

**8.** Arrangement according to one of Claims 1 to 7, **characterized in that** the sound transducer (11, 12) and the coupling point of the slide ring (6, 7) are not in planar contact.

**9.** Arrangement according to one of Claims 1 to 8, **characterized in that** the sound transducer (11, 12) has a rounded portion for coupling and/or decoupling sound waves.

**10.** Arrangement according to one of Claims 1 to 9, **characterized in that** the sound transducer (11, 12) has a projection for coupling and/or decoupling sound waves.

**11.** Arrangement according to one of Claims 1 to 10, **characterized in that** an end face of a slide ring (6, 7) has a projection for coupling and/or decoupling sound waves by means of the sound transducer (11, 12).

**12.** Arrangement according to one of Claims 1 to 11, **characterized in that** an end face of a slide ring (6, 7) has a rounded portion for coupling and/or decoupling sound waves by means of the sound transducer (11, 12).

**13.** Arrangement according to one of Claims 1 to 12, **characterized in that** a sound transducer (11, 12) and/or an end face of a slide ring (6, 7) has a chamfered portion for coupling and/or decoupling sound waves.

**14.** Arrangement according to one of Claims 1 to 13, **characterized in that** the sound transducer (11, 12) is arranged at an outer edge of the slide ring (6, 7).

**15.** Method for monitoring a slide ring seal (5), which has at least one rotating slide ring (7) and at least one stationary slide ring (6), **characterized in that** Lamb-Rayleigh waves are generated and/or detected in and/or on at least one slide ring (6, 7).

**16.** Method according to Claim 15, **characterized in that** sound waves which propagate along the circumference of the slide ring (6, 7) are generated and detected in at least one slide ring (6, 7).

**17.** Method according to Claim 15 or 16, **characterized in that** sound waves whereof the ratio of the wavelengths (λ) to the width (b) of the slide ring (6, 7) is less than 100, preferably less than 10, in particular less than 5 are generated in at least one slide ring (6, 7).

**18.** Method according to one of Claims 15 to 17, **characterized in that** sound waves whereof the ratio of the wavelengths (λ) to the width (b) of the slide ring (6, 7) is greater than 0.01, preferably greater than 0.1, in particular greater than 0.2 are generated in at least one slide ring (6, 7).

**19.** Method according to one of Claims 15 to 18, **characterized in that** the waves propagate along the circumference of the slide ring (6, 7).

**20.** Method according to one of Claims 15 to 19, **characterized in that** the waves propagate at a front end face of the slide ring (6, 7) and/or at a rear end face of the slide ring (6, 7).

**Revendications**

**1.** Arrangement d'étanchéité d'arbre comprenant au moins une bague de glissement rotative (6) et une bague de glissement fixe (7), entre lesquelles est disposé un jeu d'étanchéité (10) pour un film lubrifiant et au moins un transducteur acoustique (11, 12) destiné à exciter des ondes acoustiques dans et/ou sur au moins une bague de glissement (6, 7), l'arrangement comportant une unité destinée à interpréter des signaux du transducteur acoustique (11, 12),
**caractérisé en ce que**
le transducteur acoustique (11, 12) est conçu pour générer et/ou pour recevoir des ondes de Lamb-Rayleigh.

2. Arrangement selon la revendication 1, **caractérisé en ce que** le transducteur acoustique (11, 12) est pour générer et/ou pour recevoir des ondes de surface acoustiques avec un rapport entre les longueurs d'onde ($\lambda$) et la largeur (b) de la bague de glissement (6, 7) inférieur à 100, de préférence inférieur à 10, notamment inférieur à 5.

3. Arrangement selon la revendication 1 ou 2, **caractérisé en ce que** le transducteur acoustique (11, 12) est conçu pour générer et/ou pour recevoir des ondes de surface acoustiques avec un rapport entre les longueurs d'onde ($\lambda$) et la largeur (b) de la bague de glissement (6, 7) supérieur à 0,01, de préférence supérieur à 0,1, notamment supérieur à 0,2.

4. Arrangement selon l'une des revendications 1 à 3, **caractérisé en ce que** le transducteur acoustique (11, 12) est conçu pour générer et/ou pour recevoir des ondes qui se propagent le long du pourtour de la bague de glissement (6, 7).

5. Arrangement selon l'une des revendications 1 à 4, **caractérisé en ce que** le transducteur acoustique (11, 12) est conçu pour générer et/ou pour recevoir des ondes qui se propagent au niveau d'un côté frontal avant de la bague de glissement (6, 7) et/ou au niveau d'un côté frontal arrière de la bague de glissement (6, 7).

6. Arrangement selon l'une des revendications 1 à 5, **caractérisé en ce qu'**au moins deux transducteurs acoustiques (11, 12) décalés d'un angle ($\alpha$) sont disposés au niveau de la bague de glissement (6, 7), l'angle ($\alpha$) étant de préférence supérieur à 30°, notamment supérieur à 60°.

7. Arrangement selon l'une des revendications 1 à 6, **caractérisé en ce qu'**au moins un transducteur acoustique (11, 12) est disposé au niveau d'un côté frontal d'une bague de glissement (6, 7).

8. Arrangement selon l'une des revendications 1 à 7, **caractérisé en ce que** le transducteur acoustique (11, 12) et le point de couplage de la bague de glissement (6, 7) ne se touchent pas en surface.

9. Arrangement selon l'une des revendications 1 à 8, **caractérisé en ce que** le transducteur acoustique (11, 12) possède une courbure servant au couplage et/ou au découplage d'ondes acoustiques.

10. Arrangement selon l'une des revendications 1 à 9, **caractérisé en ce que** le transducteur acoustique (11, 12) possède une partie saillante servant au couplage et/ou au découplage d'ondes acoustiques.

11. Arrangement selon l'une des revendications 1 à 10, **caractérisé en ce qu'**un côté frontal d'une bague de glissement (6, 7) possède une partie saillante servant au couplage et/ou au découplage d'ondes acoustiques par le transducteur acoustique (11, 12).

12. Arrangement selon l'une des revendications 1 à 11, **caractérisé en ce qu'**un côté frontal d'une bague de glissement (6, 7) possède une courbure servant au couplage et/ou au découplage d'ondes acoustiques par le transducteur acoustique (11, 12).

13. Arrangement selon l'une des revendications 1 à 12, **caractérisé en ce qu'**un transducteur acoustique (11, 12) et/ou un côté frontal d'une bague de glissement (6, 7) possède un chanfreinage servant au couplage et/ou au découplage d'ondes acoustiques.

14. Arrangement selon l'une des revendications 1 à 13, **caractérisé en ce que** le transducteur acoustique (11, 12) est disposé au niveau d'un bord extérieur de la bague de glissement (6, 7).

15. Procédé de surveillance d'une garniture d'étanchéité de bague de glissement (5), laquelle possède au moins une bague de glissement rotative (6) et au moins une bague de glissement fixe (7), **caractérisé en ce que** des ondes de Lamb-Rayleigh sont générées et/ou détectées dans et/ou sur au moins une bague de glissement (6, 7).

16. Procédé selon la revendication 15, **caractérisé en ce que** des ondes acoustiques qui se propagent le long du pourtour de la bague de glissement (6, 7) sont générées et détectées dans au moins une bague de glissement (6, 7).

17. Procédé selon la revendication 15 ou 16, **caractérisé en ce que** dans au moins une bague de glissement (6, 7) sont générées des ondes acoustiques dont les longueurs d'onde ($\lambda$) sont inférieures à 100, de préférence inférieures à 10, notamment inférieures à 5 par rapport à la largeur (b) de la bague de glissement (6, 7).

18. Procédé selon l'une des revendications 15 à 17, **caractérisé en ce que** dans au moins une bague de glissement (6, 7) sont générées des ondes acoustiques dont les longueurs d'onde ($\lambda$) sont supérieures à 0,01, de préférence supérieures à 0,1, notamment supérieures à 0,2 par rapport à la largeur (b) de la bague de glissement (6, 7).

19. Procédé selon l'une des revendications 15 à 18, **caractérisé en ce que** les ondes se propagent le long du pourtour de la bague de glissement (6, 7).

**20.** Procédé selon l'une des revendications 15 à 19, **caractérisé en ce que** les ondes se propagent au niveau d'un côté frontal avant de la bague de glissement (6, 7) et/ou au niveau d'un côté frontal arrière de la bague de glissement (6, 7).

**Fig. 1**

Fig. 2

Fig. 3

# Fig. 4

Kompressionswelle

$\theta_L$

10

$\lambda_F$

Lambwelle    Substrat        Leck-Lambwelle

$\lambda_L$

6

Fig. 5b

Fig. 5a

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2362122 A2
- WO 2010142367 A1
- WO 2008089800 A1
- US 6360610 B1